# EUROPEAN PATENT APPLICATION

(11) **EP 4 475 204 A1**
(43) Date of publication of application: **11.12.2024**
(21) Application number: 24178885.0
(22) Date of filing: 29.05.2024
(51) Int. Cl.: H01M 4/04, H01M 4/62, H01M 4/06

(54) **PVDF PLASTICIZER FOR ELECTRODE FABRICATION AND UNIVERSAL BATTERY APPLICATION THEREOF**

(30) Priority: 09.06.2023 IN 202341039648
(71) Applicant: Hindustan Petroleum Corporation Limited, Karnataka, Bangalore 560067 (IN)
(72) Inventor: KRISHNAMURTHY, NARAYANAN, 560067 Bengaluru, Karnataka (IN); RAJKUMAR, KANAKARAJ, 560067 Bengaluru, Karnataka (IN); BINITHA, G, 560067 Bengaluru, Karnataka (IN); BOJJA, RAMACHANDRA RAO, 560067 Bengaluru, Karnataka (IN)
(74) Representative: Ege Lee & Roider Patentanwälte

(57) **Abstract**

The presently claimed invention relates to a plasticizer for polyvinylidene fluoride (PVDF), which is used as a binder for electrode fabrication.

## Description

### FIELD OF THE INVENTION:

The present invention relates to a plasticizer for polyvinylidene fluoride (PVDF), which is used as a binder for electrode fabrication.

### BACKGROUND OF THE INVENTION:

Typically, in a secondary battery for electrochemical energy conversion and storage, two electrodes and an electrolyte are commonly employed with electrochemical reactions proceeding at both electrodes with more or less significant changes in the composition of the electrolyte. Frequently constituents of the electrolyte solution are consumed or new ones are generated during electrochemical process in a cell. The associated changes in properties of the electrolyte are mostly unwelcome because they might, for e.g., result in reduced ionic conductivity and increased internal resistance of the device. For sustained performance of the cell, a certain minimum amount of electrolyte is essential.

Typical examples of metal-ion batteries reported in various studies include sodium-, lithium-, potassium, magnesium, calcium, and fluorine-ion batteries. In general, for any battery, electrode material is a critical factor affecting battery performance and cost relative to other materials. While several studies have been dedicated to materials discovery, notable progress has been made on the engineering front as well. The incentive for improving electrode performance lies largely on the electrochemical storage property of the active material. Nonetheless, the electrode fabrication has a major role which significantly affects the battery performance. In particular, binder, conducting carbon, solvent, and their proportions also have a considerable role in deciding the rate capability, cycling performance, and energy density.

The electrode fabrication procedure is broadly as follows: battery constituents, which include an electrode active material, conductive carbon, and binder, are homogenized in a solvent. The resulting suspension is referred to as electrode slurry, which is then coated on a metal foil, for e.g., Al and/or Cu, to obtain the electrode. There have been several studies focusing on various components of the battery such as electrode, electrolyte, separator and binders.

The main purpose of a binder is to hold the active material together in the electrode and improve the adhesion between the electrode and current collectors. The addition of binder to the active material requires much attention. The quality measurements that have been considered for the choice of appropriate binder are adhesion strength, hydrophilicity, thermal and electrochemical stability to withstand long charge-discharge cycles, and non-toxicity. Additionally, the crystallite size, conductivity and ion-diffusion ability in binders are equally important parameters for consideration. The list of binders includes both natural and synthetic materials. Polyvinylidene fluoride (PVDF) is a semi crystalline polymer widely used in the fabrication of electrochemical devices such as Li-ion batteries, supercapacitors, nanogenerators due to their superior properties such as mechanical, thermal and chemical stability, and non-toxicity. On behalf of the binding efficiency of PVDF, an enormous number of literature have been reported. From this, it was observed that PVDF is a suitable binder for almost all kinds of electrode materials such as activated carbon, carbon nanofiber, graphene, carbon nanotubes, conducting polymers (polyaniline, polythiophene, polypyrrole, and metal oxides). Several documents discussing PVDF as suitable binder have been summarized below:

KR101413433B1 relates to binder material for secondary batteries. The disclosed material includes rosin and rosin derivatives. Additionally, the material may further contain a fluorine containing polymer. The fluorine containing polymer includes PVDF and other copolymers such as PVDF-hexafluoropropylene, and PVDF-tetrafluoroethylene.

WO2016123168A1 discloses a lithium-ion capacitor. The capacitor includes: an anode including: a conductive support; a first mixture coated on the conductive support including: a carbon sourced from coconut shell flour; a conductive carbon black; and a PVDF binder. A second mixture comprising micron-sized lithium metal particles having an encapsulating shell is coated on the first mixture. The encapsulated shell comprises LiPF₆, mineral oil, and a thermoplastic binder.

WO2018084431A1 relates to an electrode for a secondary battery capable of preventing a short circuit phenomenon of the electrode. The electrode comprises an active material layer on a current collector, said layer comprising a binder having PVDF. A short circuit prevention layer is formed on the active material layer, the prevention layer comprising a porous polymer fiber web formed of accumulated fibers of a heat-resistant polymer material.

WO2019074025A1 relates to a method for producing an electrode for a non-aqueous electrolyte secondary battery. The method comprises preparing a dispersion by mixing the electrode active material, PVDF binder, a first solvent, and a second solvent. Subsequently, a slurry is prepared by removing the second solvent from the dispersion followed by coating the slurry on current collector.

There are several other state-of-the-art documents discussing PVDF as preferred binder material for electrode fabrication in metal ion batteries. Despite the extensive use and study of PVDF as binder material for batteries, there are several challenges associated thereto. For instance, PVDF is considered not suitable for enhancing the conductivity and ion diffusion, thereby severely impeding the rate performance and cyclability in the long run. Further, carbonate based organic solvents, phthalate compounds, organic acetates and the likes have been used as plasticizers in the state of the art. However, the electrochemical performance is not greatly improved. A suitable plasticizer for PVDF requires controlling the crystallite size of the long chain, thereby improving the conductivity and enabling enhanced diffusion of metal ions (such as Li⁺, Na⁺, K⁺) in and out of the electrode while keeping the particles intact. Since this is not observed in the state-of-the-art, where the plasticizers are directly added during the slurry preparation, without any change in conventional fabrication process, the resulting electrodes are not much valuable from commercial aspect.

In view of the foregoing, plasticizing the PVDF binder is a promising option to ensure one or more of the aforesaid challenges are overcome. Upon plasticizing, the PVDF polymer particles are able to soften, flow and adhere to powdery materials during manufacture, resulting in electrodes with high connectivity that are non-reversible. In view of the same, there is a long-felt need for an electrode slurry, which could provide a facile fabrication technique, which results in enhanced electrochemical properties in the electrode.

It was, therefore, an object of the present invention to provide an electrode slurry effective in mitigating one or more of the challenges in the state of the art.

### SUMMARY OF INVENTION:

Surprisingly, it has been found that the above object is met by providing an electrode slurry described hereinbelow.

Accordingly, in one aspect, the present invention relates to an electrode slurry comprising:
(a) 60 wt.% to 98 wt.% of an electrode active material,
(b) 0 wt.% to 20 wt.% of conductive carbon, and
(c) 1 wt.% to 20 wt.% of a plasticized binder,
wherein the wt.% is based on the total weight of the slurry, characterized in that,
the plasticized binder comprises: polyvinylidene fluoride, and a plasticizer selected from the group consisting of: tetraglyme, diglyme, triglyme, and monoglyme.

In an embodiment, the plasticizer is present in an amount ranging between 1 wt.% to 50 wt.% based on the weight of polyvinylidene fluoride.

In another embodiment, the plasticized binder is obtained by mixing polyvinylidene fluoride with the plasticizer.

In another aspect, the present invention relates to a method for preparing the above electrode slurry by mixing the electrode active material, conductive carbon, and plasticized binder, in presence of a solvent.

In an embodiment, the solvent is selected from the group consisting of N-Methyl-2-pyrrolidone (NMP), dimethyl formamide (DMF), dimethyl sulfoxide (DMSO), and dimethylacetamide (DMAc).

In still another aspect, the present invention relates to a method for preparing an electrode by coating the above electrode slurry on a current collector.

In an embodiment, the current collector is subjected to drying at a temperature ranging between 50°C to 200°C.

In yet another aspect, the present invention relates to an electrode obtained from the above method.

In a further aspect, the present invention relates to a battery comprising the above electrode.

In an embodiment, the battery is selected from a lithium-ion battery, a sodium ion battery, a potassium ion battery, zinc ion battery, aluminium ion battery, calcium ion battery, fluorine ion battery, an aqueous battery, and a primary battery.

In another aspect, the present invention relates to an electrolyzer comprising the above electrode.

In still further aspect, the present invention relates to a fuel cell comprising the above electrode.

### BRIEF DESCRIPTION OF FIGURES:

Figures 1(a)-(b) show galvanostatic charge discharge profile, and rate capability of lithium iron phosphate cathode for lithium-ion battery in accordance with an embodiment of the present invention.

Figures 2(a)-(b) show galvanostatic charge discharge profile, rate capability, and cycling capability of graphite anode for lithium-ion battery in accordance with an embodiment of the present invention.

Figures 3(a)-(c) show galvanostatic charge discharge profile, rate capability, and cycling capability of lithium nickel manganese cobalt oxide cathode for lithium-ion battery in accordance with an embodiment of the present invention.

Figures 4(a)-(d) show galvanostatic charge discharge profile, rate capability (with tetraglyme and diglyme as plasticizers), and cycling capability (with tetraglyme as plasticizer) of hard carbon anode for sodium-ion battery in accordance with an embodiment of the present invention.

Figures 5(a)-(c) show galvanostatic charge discharge profile, rate capability, and cycling capability of Na₃(VO)₂(PO₄)₂F cathode for sodium-ion battery in accordance with an embodiment of the present invention.

### DETAILED DESCRIPTION OF THE INVENTION:

Before the present invention is described, it is to be understood that the terminology used herein is not intended to be limiting since the scope of the presently claimed invention will be limited only by the appended claims.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Furthermore, the terms "first", "second", "third" or "(a)", "(b)", "(c)", "(d)", etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(A)", "(B)", and "(C)" or "(a)", "(b)", "(c)", "(d)", "I", "ii", etc. relate to steps of a method or use or assay, there is no time or time interval coherence between the steps, that is, the steps may be carried out simultaneously or there may be intervals of seconds, minutes, hours, days, weeks, months, or even years between such steps, unless otherwise indicated in the application as set forth hereinabove or below.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the presently claimed invention. Thus, appearances of the phrases "in one embodiment" or "in an embodiment" in various places throughout this specification are not necessarily all referring to the same embodiment, but may. Further, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of this invention, and form different embodiments, as would be understood by those skilled in the art. For example, in the appended claims, any of the claimed embodiments can be used in any combination.

Furthermore, the ranges defined throughout the specification include the end values as well, i.e., a range of 1 to 10 implies that both 1 and 10 are included in the range. For the avoidance of doubt, the applicant shall be entitled to any equivalents according to applicable law.

As used herein, the terms "charge" and "charging" may refer to a process of providing electrochemical energy to a cell.

As used herein, the terms "discharge" and "discharging" refer to a process for removing electrochemical energy from a cell, for example, when using the cell to perform desired work.

As used herein, the term "positive electrode" may refer to an electrode (often called a cathode) where electrochemical reduction occur during a discharging process.

As used herein, the term "negative electrode" may refer to an electrode (often called an anode) where electrochemical oxidation occurs during a discharging process.

An aspect of the present invention is directed towards an electrode slurry.

In an embodiment, the electrode slurry comprises: (a) 60 wt.% to 98 wt.% of an electrode active material, (b) 0 wt.% to 20 wt.% of conductive carbon, and (c) 1 wt.% to 20 wt.% of a plasticized binder. The wt.% is based on the total weight of the slurry.

The choice of suitable electrode active material depends on the battery and type of electrode, i.e., positive or negative. In an embodiment, the active material capable of intercalating and de-intercalating the metal ion is used, and can be roughly divided into a group of inorganic compounds and a group of organic compounds.

The electrode active material in the group of inorganic compounds may include transition metal oxides, transition metal sulfides, lithium containing complex metal oxides between lithium and the transition metal etc. As the above transition metal, Ti, V, Cr, Mn, Fe, Co, Ni, Cu, Mo and the likes can be used. As for the transition metal oxides, MnO, MnO₂, V₂O₅, V₆O₁₃, TiO₂, Cu₂V₂O₃, amorphous V₂O-P₂O₅, MoOs, V₂O₅, V₆O₁₃ and the likes may be mentioned.

As the transition metal sulfides, TiS₂, TiS₃, amorphous MoS₂, FeS and the likes may be mentioned. As the lithium containing complex metal oxides, the lithium containing metal oxide having a layered structure, the lithium containing complex metal oxides having spinel structure, and the lithium containing complex metal oxide having olivine structure and the likes may be mentioned.

As for the lithium containing complex metal oxide having the layered structure, lithium containing cobalt oxide (LiCoO₂), lithium containing nickel oxide (LiNiO₂), lithium complex oxide of Co-Ni-Mn, lithium complex oxide of Ni-Mn-Al, lithium complex oxide of Ni-Co-Al, xLiMaO₂.(1-x)Li₂MbO₃ (wherein, 0<x<1, Ma is one or more transition metal having the average oxidation state of 3⁺, Mb is one or more transition metal having the average oxidation state of 4⁺) which is a solid solution of LiMaO₂ and Li₂MbO₃, and the likes may be mentioned.

As the lithium containing complex metal oxides having spinel structure, Liₐ[Mn₂₋ₓMdₓ]O₄ (here, Md is one or more transition metal having the average oxidation state of 4⁺, Md=Ni, Co, Fe, Cu, Cr or so, 0<x<1, 0≦a≦1) of which a part of Mn of lithium manganite (LiMn₂O₄) is substituted by other transition metal and the likes may be mentioned.

As the lithium containing complex metal oxide having olivine structure, the olivine type lithium phosphate compound expressed by Li_{y}McPO₄ (here, Mc is one or more transition metal having the average oxidation state of 3⁺, and Mc=Mn, Co or so, 0^y^2) and the likes may be mentioned.

As negative electrode, carbon-based anodes such as graphite, silicon/graphite composite, mesocarbon microbead (MCMB), hard carbon, soft carbon, alloy-based compounds and intercalation-based compounds can be the choice. As cathode for sodium ion battery, layered metal oxides, polyanion compound, mixed polyanion compounds, Prussian Blue analogs can be the choice.

The particle diameter of the electrode active material used in the present invention may be properly selected depending on the other battery requirements. For instance, the average diameter may range between 0.01 to 50 µm. Similarly, BET specific surface area of the electrode active material may range between 0.1 m²/g to 1000 m²/g. Herein, "BET specific surface area" refers to the BET specific surface area by the nitrogen adsorption method.

In an embodiment, the electrode active material is present in the slurry in an amount ranging between 60 wt.% to 95 wt.%, or 65 wt.% to 95 wt.%, or 65 wt.% to 90 wt.%. In another embodiment, the amount ranges between 70 wt.% to 90 wt.%, or 70 wt.% to 85 wt.%, or 75 wt.% to 85 wt.%.

Accordingly, in an embodiment, the electrode slurry comprises: (a) 70 wt.% to 85 wt.% of an electrode active material, (b) 0 wt.% to 20 wt.% of conductive carbon, and (c) 1 wt.% to 20 wt.% of a plasticized binder.

In yet another embodiment, the electrode slurry comprises conductive carbon (or electrically conductive carbon). Suitable examples of electrically conductive carbon include carbon black, super P, acetylene black, ketjen black, reduced graphene oxide, carbon nanotubes, and graphene.

In an embodiment, the conductive carbon is present in the electrode slurry in an amount ranging between 0 wt.% to 20 wt.%. Said otherwise, the presence of conductive carbon in the slurry may be optional and depend on the type of battery. When present, the amount of conductive carbon ranges in between 1 wt.% to 20 wt.%, or 2 wt.% to 18 wt.%, or 2 wt.% to 15 wt.%. In another embodiment, the conductive carbon is present in amounts ranging between 5 wt.% to 15 wt.%, or 5 wt.% to 12 wt.%, or 7 wt.% to 12 wt.%.

Accordingly, in an embodiment, the electrode slurry comprises: (a) 65 wt.% to 94 wt.% of an electrode active material, (b) 5 wt.% to 15 wt.% of conductive carbon, and (c) 1 wt.% to 20 wt.% of the plasticized binder.

In still another embodiment, the electrode slurry comprises plasticized binder. In the present context, the plasticized binder comprises polyvinylidene fluoride (PVDF) and a plasticizer. PVDF acts as a binder, which binds the electrode active material with each other. PVDF has been extensively used as a binder in the context of electrode fabrication, as it overcomes the difficulty of dissolving against organic electrolytic solutions. Surprisingly, it has been observed in the present invention that plasticizing the binder further results in enhancement of the electrochemical properties, particularly the rate capability and cyclability of the electrode.

In an embodiment, the PVDF binder has a molecular weight (M_{w}) ranging between 5×10³ g/mol to 1.1×10⁶ g/mol. In another embodiment, the molecular weight (M_{w}) ranges between 2×10⁴ g/mol to 1.1×10⁶ g/mol, or 5×10⁴ g/mol to 1.1×10⁶ g/mol, or 8×10⁴ g/mol to 1.1×10⁶ g/mol, or 1×10⁵ g/mol to 1.1×10⁶ g/mol, or 5×10⁵ g/mol to 1.1×10⁶ g/mol, or 8×10⁵ g/mol to 1.1×10⁶ g/mol.

Suitable plasticizers can be selected from the group consisting of: tetraglyme, diglyme, triglyme, and monoglyme. Glymes, also known as glycol diethers, are saturated non-cyclic polyethers containing no other functional groups. In the present context, tetraglyme may be referred as tetraethylene glycol dimethyl ether, diglyme as diethylene glycol dimethyl ether, triglyme as triethylene glycol dimethyl ether, and monoglyme as ethylene glycol dimethyl ether.

In an embodiment, the binder is first plasticized before adding to the electrode slurry. For example, , the plasticizer can be mixed with PVDF binder to obtain the plasticized binder.

In an embodiment, the plasticizer is present in an amount between 1 wt.% to 50 wt.% based on the weight of PVDF. In another embodiment, the amount ranges between 5 wt.% to 50 wt.%, or 5 wt.% to 45 wt.%, or 10 wt.% to 40 wt.% based on the weight of PVDF. In still another embodiment, the amount ranges between 10 wt.% to 30 wt.%, or 15 wt.% to 25 wt.% based on the weight of PVDF.

The plasticized binder is present in the electrode slurry in an amount ranging between 1 wt.% to 20 wt.%, or 2 wt.% to 18 wt.%, or 2 wt.% to 15 wt.%. In another embodiment, it is present in an amount ranging between 5 wt.% to 15 wt.%, or 5 wt.% to 12 wt.%, or 7 wt.% to 12 wt.%.

Accordingly, in an embodiment, the electrode slurry comprises: (a) 65 wt.% to 95 wt.% of an electrode active material, (b) 0 wt.% to 20 wt.% of conductive carbon, and (c) 5 wt.% to 15 wt.% of the plasticized binder.

In yet another embodiment, the electrode slurry comprises: (a) 70 wt.% to 85 wt.% of an electrode active material, (b) 5 wt.% to 15 wt.% of conductive carbon, and (c) 5 wt.% to 15 wt.% of the plasticized binder.

In another embodiment, a solvent may also be included in the slurry. Suitable examples of the solvent include, but not limited to, N-Methyl-2-pyrrolidone (NMP), acetone, ethanol, dimethyl formamide (DMF), dimethyl sulfoxide (DMSO), dimethylacetamide (DMAc), water, and mixtures thereof. In an embodiment, the solvent is selected from the group consisting of: N-Methyl-2-pyrrolidone (NMP), dimethyl formamide (DMF), dimethyl sulfoxide (DMSO), dimethylacetamide (DMAc), and mixtures thereof.

Another aspect of the present invention relates to a method for preparing the electrode slurry, as described herein. Accordingly, the embodiments described hereinabove in respect of the electrode slurry are applicable here as well.

In an embodiment, the method comprises mixing the electrode active material, conductive carbon, and plasticized binder in presence of the solvent. Suitable mixing means in the present context are known to the person skilled in the art. For instance, a stirrer or a slurry vacuum mixer or a homogenizer may be employed for mixing the ingredients. Further, suitable surfactants and other additives used generally in the context of preparing electrode materials are also known to the person skilled in the art and may therefore be used in the present invention as well. Hence, the present invention is not limited by the same.

Yet another aspect of the present invention relates to a method for preparing an electrode.

In an embodiment, the method comprises coating the electrode slurry, as described hereinabove, on a current collector. Accordingly, the embodiments described hereinabove in respect of the electrode slurry are applicable here as well.

The electrode slurry can be coated on the current collector by any commonly known method without any specific limitation. Specific examples of application methods that can be used include, but are not limited to, doctor blading, dip coating, reverse roll coating, direct roll coating, gravure coating, extrusion coating, and brush coating. The slurry may be applied onto one side or both sides of the current collector. The thickness of the slurry coating on the current collector after application, but before drying, may be set as appropriate in accordance with the thickness of the electrode mixed material layer to be obtained after drying.

The current collector onto which the slurry is applied is a material having good electrical conductivity and electrochemical durability. Specifically, the current collector may, for example, be made of iron, copper, aluminum, nickel, nickel mesh, nickel foam, stainless steel, titanium, tantalum, carbon paper, carbon cloth, graphite, gold, or platinum. Of these materials, copper foil is particularly preferable as the current collector for a negative electrode. On the other hand, aluminum foil is particularly preferable as a current collector for a positive electrode. One of the aforementioned materials may be used individually, or two or more of the aforementioned materials may be used in combination in a freely selected ratio.

In the present disclosure, the slurry is applied onto a surface of the current collector. In an embodiment, the slurry may coat the surface of the current collector to a suitable thickness, for instance, ranging between 10 µm to 1000 µm. The person skilled in the art is aware of suitable coating thickness, and the present invention is not limited by the same.

The slurry once coated on the current collector is subjected to drying by any commonly known method without any specific limitations. Examples of drying methods that can be used include, but not limited to, drying by warm, hot, or low-humidity air; drying in a vacuum; and drying by irradiation with infrared light, electron beams, or the like. Suitable drying temperature ranges between 50°C to 200°C. Through drying of the slurry on the current collector as described above, an electrode mixed material layer is formed on the current collector, thereby providing an electrode for secondary battery-use that includes the current collector and the electrode mixed material layer.

After the drying step, the electrode mixed material layer may be further subjected to a pressing process, such as mold pressing or roll pressing. The pressing process can improve close adherence between the electrode mixed material layer and the current collector.

Still another aspect of the present invention relates to the electrode obtained by the method described hereinabove. Accordingly, the embodiments described hereinabove in respect of the method for preparing the electrode are applicable here as well.

Yet another aspect of the present invention relates to a battery.

In an embodiment, the battery comprises the electrode described hereinabove. Accordingly, the embodiments pertaining to the electrode and the method for preparing the electrode are applicable here as well.

Suitable examples of battery include a lithium-ion battery, a sodium ion battery, a potassium ion battery, zinc ion battery, aluminium ion battery, calcium ion battery, fluorine ion battery, an aqueous battery, and a primary battery. The battery may include other components such as a separator, electrolyte, and the likes.

In the present disclosure, the electrolyte may include a liquid electrolyte, a gel polymer, a solid electrolyte, or a combination thereof. The liquid electrolyte may include, but not limited to, a lithium or a sodium salt, an organic solvent, or a combination thereof; and the gel electrolyte may include an organic solid electrolyte containing a polymer compound, an inorganic solid electrolyte, or a combination thereof. The solid electrolyte may include an organic solid electrolyte containing a polymer compound, an inorganic solid electrolyte, or a combination thereof.

In the present disclosure, when the electrolyte is a liquid electrolyte, it includes an electrolyte salt and a solvent. The electrolyte salt that is used in the present invention includes one or more selected from the group consisting of: sodium-containing hydroxides (e.g., sodium hydroxide (NaOH), etc.), borates (e.g., sodium metaborate (NaBO₂), borax (Na₂B₄O₇), boric acid (H₃BO₃), etc.), phosphates (e.g., sodium phosphate tribasic (Na₃PO₄), sodium pyrophosphate (Na₂HPO₄), etc.), chloric acid (e.g., NaClO₄, etc.), NaAlCl₄, NaAsF₆, NaBF₄, NaPF₆, NaSbF₆, NaCF₃SO₃, and NaN(SO₂CF₃)₂, NaFSI, NaTFSI, sodium fluoride, sodium sulfate, sodium nitrate, and sodium lignosulfonate. Lithium salts such as, but not limited to, LiPF₆, LiFSI, LiTFSI, LiCF₃SO₃, and LiClO₄ can also be used.

In addition, in the present disclosure, a solvent may be used without particular limitation, as long as it may serve as a medium through which ions involved in the electrochemical reaction of the battery may move. Specifically, the solvent may be an aqueous solvent such as water or an alcohol, or a non-aqueous solvent such as an ester solvent, an ether solvent, a ketone solvent, an aromatic hydrocarbon solvent, an alkoxyalkane solvent, or a carbonate solvent. It is possible to use one or a mixture of two or more solvents selected from amongst these solvents.

Suitable solvents can be selected from the group consisting of: trimethyl phosphate (TMP), triethyl phosphate (TEP), methyl ethyl carbonate, methylpropionate carbonate, ethyl propionate, ethyl acetate, ethyl methyl carbonate, methyl formate, propylene carbonate, ethylene carbonate, vinylene carbonate, fluoroethylene carbonate, methyl acetate, triethylene glycoldimethyl ether, dimethyl sulfone, dimethyl ether, ethylene sulfite, diethyl carbonate, dimethyl carbonate, propylene oxide, propylene sulfite, ethylene glycol monobutyl ether, ethylene glycol monomethyl ether, ethylene glycol monoethyl ether, propyl acetate, methyl butanone, methyl isobutylketone, toluene cyclohexanone, ethylene glycol dimethylether and Tetraethylene glycol dimethyl ether.

In the present context, the separator separates the negative electrode and the positive electrode from each other, and provides a channel for metal ions to move, and any known separator may be used for this purpose. Said otherwise, it is possible to use a separator having excellent electrolyte solution moisturizing ability, while having low resistance to electrolyte ion movement. For example, the separator may be selected from among glass microfibers, polyester, Teflon, polyethylene, polypropylene, polytetrafluoroethylene (PTFE), or combinations thereof, and may be in the form of nonwoven fabric or woven fabric. Preferably, a polyolefin-based polymer separator such as polyethylene or polypropylene is used for metal-ion secondary battery, and a coated separator containing a ceramic component or a polymer material may be used to ensure heat resistance or mechanical strength. Optionally, the separator may have a single-layer or multilayer structure.

Yet another aspect of the present invention relates to an electrolyzer.

In an embodiment, the electrolyzer comprises the electrode described hereinabove. Accordingly, the embodiments pertaining to the electrode and the method for preparing the electrode are applicable here as well.

Yet another aspect of the present invention relates to a fuel cell.

In an embodiment, the fuel cell comprises the electrode described hereinabove. Accordingly, the embodiments pertaining to the electrode and the method for preparing the electrode are applicable here as well.

Advantageously, the present invention provides for an improved electrode slurry for fabrication of electrode. The resulting electrode has acceptable and increased electrochemical performance in terms of rate capability and cyclability. Further, the present invention also provides a facile fabrication of electrode with optimum processing conditions.

While the foregoing description discloses various embodiments of the disclosure, other and further embodiments of the invention may be devised without departing from the basic scope of the disclosure. The invention is not limited to the described embodiments, versions or examples, which are included to enable a person having ordinary skill in the art to make and use the invention when combined with information and knowledge available to the person having ordinary skill in the art.

### EXAMPLES

The presently claimed invention is illustrated by the non-restrictive examples which are as follows:

### Compounds:

| | |
|---|---|
| Active material | LiFePO₄ / LiNi_{0.5}Mn_{0.3}Co_{0.2}O₂ / Graphite / Hard carbon / Na₃(VOPO₄)₂F |
| Binder | Polyvinylidene fluoride (PVDF) |
| Plasticizer | Tetraglyme, Triglyme, Diglyme, Monoglyme |
| Conductive carbon | Super P |
| Solvent | N-Methyl-2-pyrrolidone (NMP) |

Electrode slurry was prepared by mixing 80 wt.% active material, 10 wt.% conductive carbon, 10 wt.% PVDF, and suitable amount of NMP to obtain a homogenous mixture. To this mixture, 5 wt.% to 50 wt.% of the plasticizers were added to obtain a viscous slurry. The slurry was then coated on Al/Cu foil by doctor blade method and dried at 120°C in a vacuum oven to obtain the electrodes with different plasticizers. Subsequently, the electrodes were subjected to calendaring and punching to 15 mm diameter size. Half cells were fabricated with Li/Na as counter/reference, polypropylene/glass microfiber as separator and 1M LiPF₆ in Ethylene carbonate/Diethyl carbonate with 5% Fluoroethylene carbonate or 1M NaClO₄ in Propylene Carbonate with 5% Fluoroethylene carbonate as electrolyte.

Details of various electrodes are provided in Table 1 below:

| Sample No. | Active material | Plasticizer | Amount of Plasticizer in % with respect to the weight of PVDF |
|---|---|---|---|
| 1 | LiFePO₄ | tetraglyme | 20 |
| 2 | Graphite | tetraglyme | 20 |
| 3 | NMC | tetraglyme | 20 |
| 4 | Hard carbon | tetraglyme | 20 |

| | | | |
|---|---|---|---|
| 5 | Hard carbon | diglyme | 20 |
| 6 | Na₃(VOPO₄)₂F | tetraglyme | 20 |

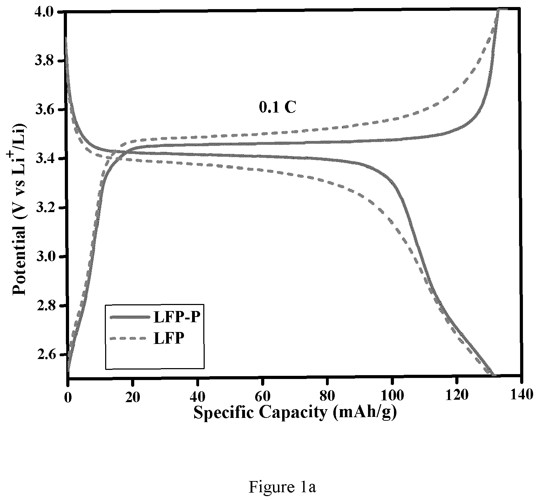

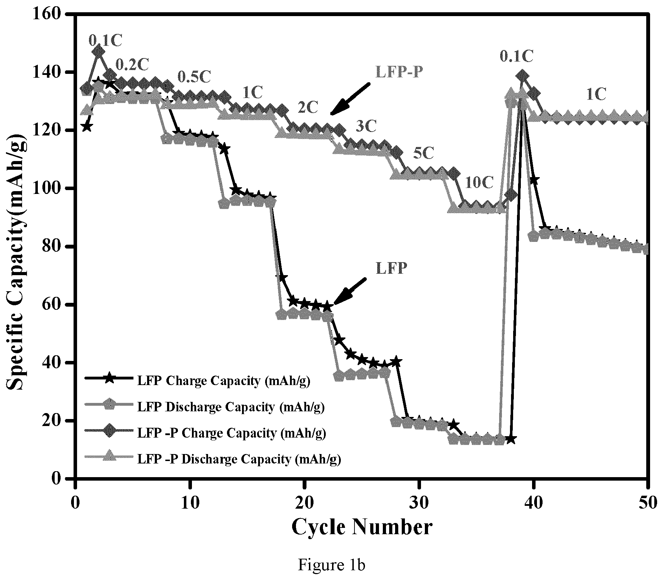

Figure 1(a) represents the galvanostatic charge-discharge curves of LiFePO₄ cycled at 0.1C. The LiFePO₄ electrode prepared with plasticizer (LFP-P) presents a better charge discharge profile than the one without plasticizer (LFP). Figure 1(b) depicts the rate capability graph wherein the LiFePO₄ electrode prepared with plasticizer outperformed the other one. For e.g., at 10C, the capacity was around 95 mAh/g for the electrode with plasticizer, whereas the capacity of the one without plasticizer was 10mAh/g.

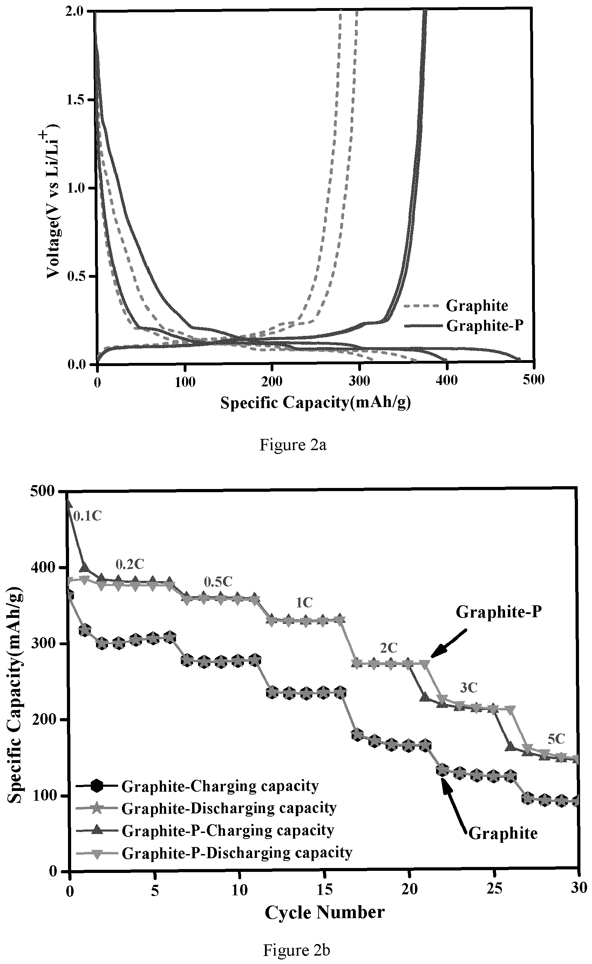

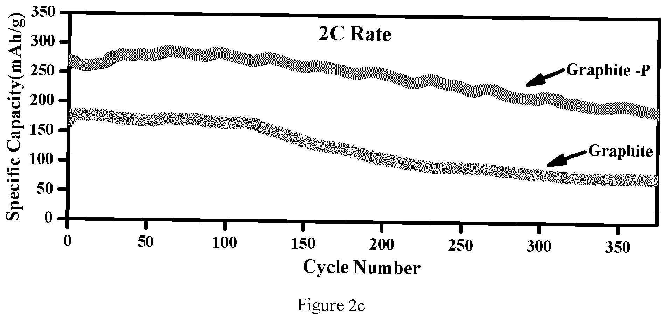

Figure 2(a) represents the galvanostatic charge-discharge curves of graphite cycled at 0.1°C. The graphite anode prepared with plasticizer (Graphite-P) presents a better charge discharge profile than the one without plasticizer (Graphite). The reversible capacity obtained in the second cycle was 400mAh/g for Graphite-P, and for the one without plasticizer (Graphite) it was 320mAh/g. Figure 2(b) depicts the rate capability graph where the Graphite-P electrode was prepared with plasticizer which outperformed the electrode without plasticizer. For e.g., at 1C, the capacity was around 350 mAh/g for the electrode with plasticizer, whereas the capacity of the other (without plasticizer) was 250mAh/g. Figure 2(c) depicts the cycling performance, Graphite-P was found to be having higher capacity as well as better capacity retention than the one without the plasticizer.

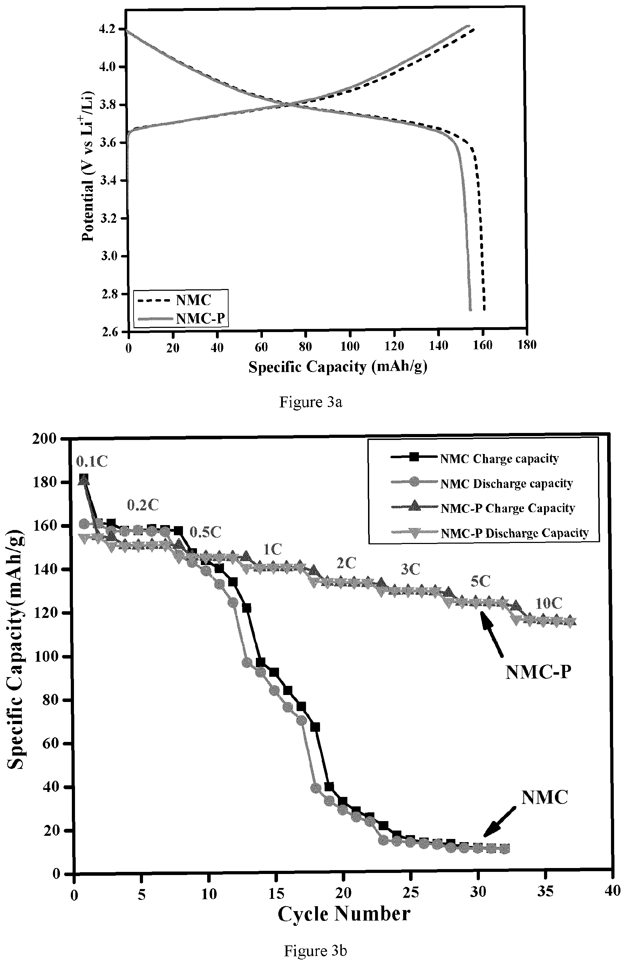

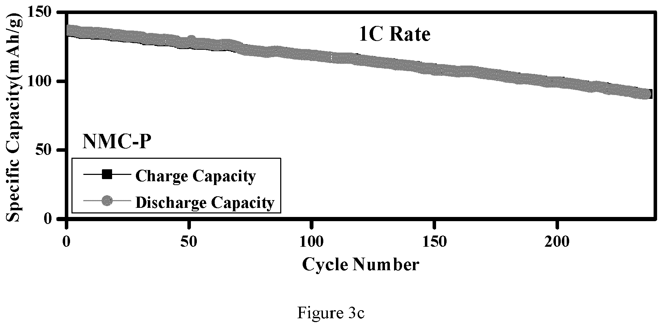

Figure 3(a) represents the galvanostatic charge-discharge curves of NMC cycled at 0.1C. The NMC cathode prepared with plasticizer (NMC-P) presents a comparable capacity than the one without plasticizer (NMC), however, the rate performance is greatly enhanced over the non-plasticized cathode. Figure 3(b) depicts the rate capability graph where the NMC-P electrode was prepared with plasticizer. Here again, the NMC-P electrode with plasticizer outperformed the electrode without plasticizer. For e.g., at 1C, the capacity was around 140 mAh/g for the electrode with plasticizer whereas the capacity of the electrode without plasticizer was less than 100mAh/g. Figure 3(c) depicts the cycling performance of NMC-P electrode for 250 cycles at 1C rate.

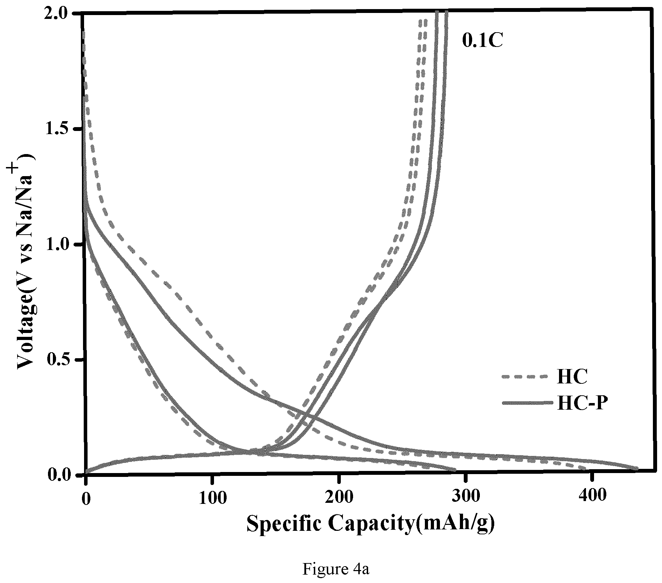

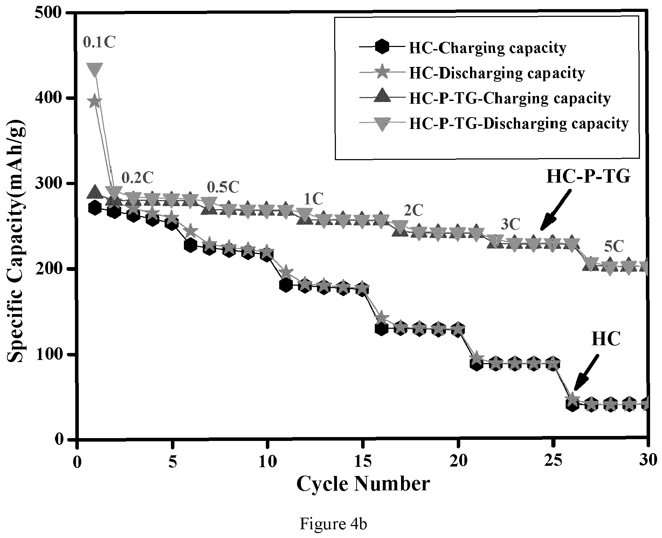

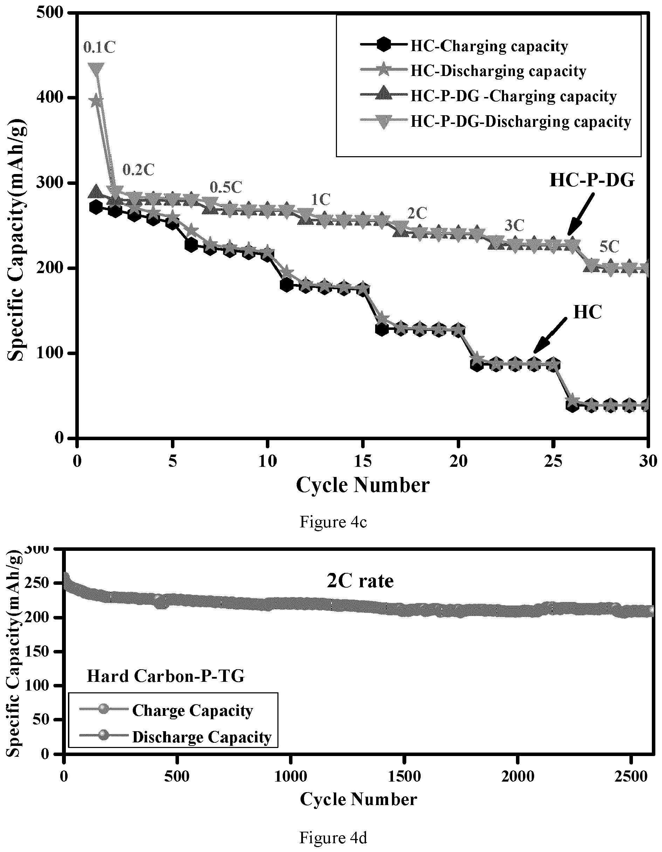

Figure 4(a) represents the first two galvanostatic charge-discharge curves of hard carbon anode cycled at 0.1C. The graphite anode prepared with plasticizer (Hard carbon-P) presents a better capacity than the one without plasticizer (Hard carbon). The reversible capacity obtained in the second cycle was 280mAh/g for hard carbon-P, for the one without plasticizer (Hard carbon) it was 280mAh/g. Figure 4(b) depicts the rate capability graph where the Hard carbon-P-TG electrode prepared with plasticizer (tetraglyme) outperformed the other one. For e.g., at 1C, the capacity was around 260 mAh/g for the electrode with plasticizer whereas the capacity of the electrode without plasticizer was only 180mAh/g. Figure 4(c) depicts the rate capability graph where the Hard carbon-P-DG electrode prepared with plasticizer (diglyme) which outperformed the other one. For e.g., at 1C, the capacity was around 260 mAh/g for the electrode with plasticizer whereas the capacity of the electrode without plasticizer was 180mAh/g. Figure 4(d) depicts the cycling performance, Hard carbon-P tested at 2C rate for more than 2500 cycles. The capacity retention was 80% even after 2500 cycles.

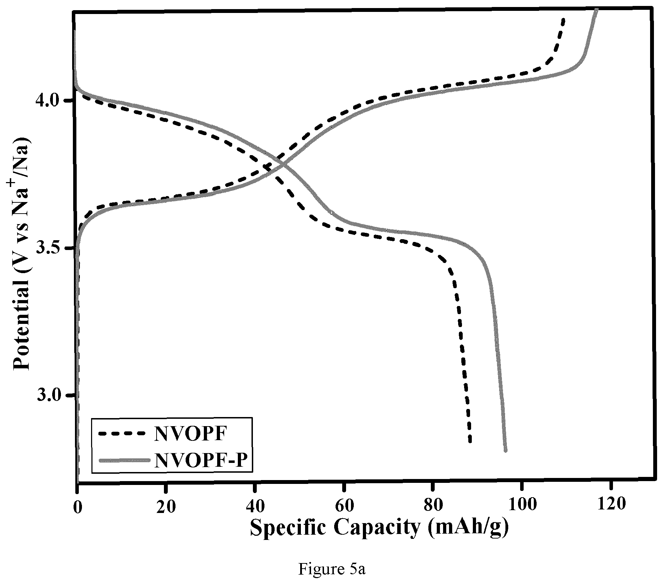

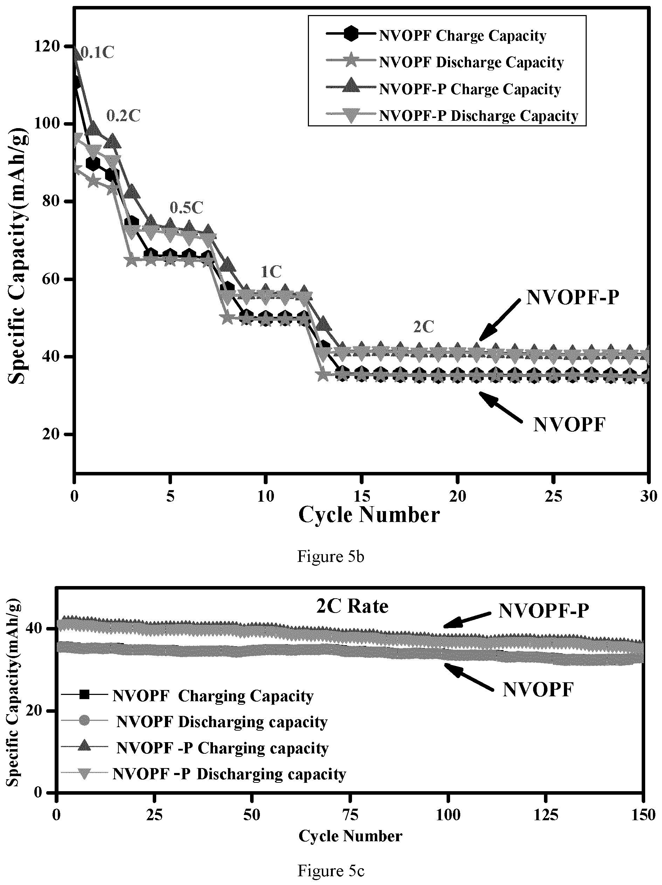

Figure 5(a) represents the galvanostatic charge-discharge curves of Na₃(VOPO₄)₂F (NVOPF-P and NVOPF) cycled at 0.1C. As seen from Figure 5(a-c), the capacity, rate capability and cyclability is better for the samples with plasticizer vis-à-vis without plasticizer.

From the foregoing, it can be concluded that the electrode slurry in accordance with the present invention results in enhanced electrochemical properties in the electrode.

## Claims

1. An electrode slurry comprising:
(a) 60 wt.% to 98 wt.% of an electrode active material,
(b) 0 wt.% to 20 wt.% of conductive carbon, and
(c) 1 wt.% to 20 wt.% of a plasticized binder,
wherein the wt.% is based on the total weight of the slurry,
**characterized in that**,
the plasticized binder comprises: polyvinylidene fluoride; and a plasticizer selected from the group consisting of: tetraglyme, diglyme, triglyme, and monoglyme.

2. The electrode slurry as claimed in claim 1, wherein the plasticizer is present in an amount ranging between 1 wt.% to 50 wt.% based on the weight of polyvinylidene fluoride.

3. The electrode slurry as claimed in claim 1 or 2, wherein the plasticized binder is obtained by mixing polyvinylidene fluoride with the plasticizer.

4. A method for preparing the electrode slurry as claimed in one or more of claims 1 to 3, the method comprising: mixing the electrode active material, conductive carbon, and plasticized binder, in presence of a solvent to obtain the electrode slurry.

5. The method as claimed in claim 4, wherein the solvent is selected from the group consisting of: N-Methyl-2-pyrrolidone (NMP), dimethyl formamide (DMF), dimethyl sulfoxide (DMSO), and dimethylacetamide (DMAc).

6. A method for preparing an electrode by coating the electrode slurry of claim 1 or as obtained from the method as claimed in claim 4 or 5, on a current collector.

7. The method as claimed in claim 6, wherein the current collector is subjected to drying at a temperature ranging between 50°C to 200°C.

8. An electrode obtained from the method as claimed in one or more of claims 6 to 7.

9. A battery comprising the electrode of claim 8.

10. The battery as claimed in claim 8, wherein the battery is selected from a lithium-ion battery, a sodium ion battery, a potassium ion battery, zinc ion battery, aluminium ion battery, calcium ion battery, fluorine ion battery, an aqueous battery, and a primary battery.

11. An electrolyzer comprising the electrode of claim 8 or as obtained from the method as claimed in one or more of claims 6 to 7.

12. A fuel cell comprising the electrode of claim 8 or as obtained from the method as claimed in one or more of claims 6 to 7.
